# EUROPÄISCHE PATENTANMELDUNG

(11) **EP 2 873 654 A1**
(43) Veröffentlichungstag der Anmeldung: **20.05.2015**
(21) Anmeldenummer: 14003177.4
(22) Anmeldetag: 14.09.2014
(51) Int. Cl.: C04B 20/12, C04B 28/00, C04B 28/02, C04B 18/28, C04B 111/00, C04B 111/20, C04B 111/28, C04B 111/52, C04B 111/60

(54) **Baustoffmischung zur Herstellung von den Schall absorbierenden und mit guten thermischen Eigenschaften ausgestatteten Bauelementen**

(30) Priorität: 14.09.2013 DE 102013015091
(71) Anmelder: MABO Naturdämmstoffe GmbH & Co. KG, 48734 Reken (DE)
(72) Erfinder: Borkowski, Martin, 48734 Reken (DE)
(74) Vertreter: Auerbach, Bettina

(57) **Zusammenfassung**

Die Erfindung betrifft eine Baustoffmischung zur Herstellung von den Schall absorbierenden und mit guten thermischen Eigenschaften ausgestatteten Bauelementen, bestehend aus Füllstoffen und Bindemitteln, wobei als Füllstoff wenigstens ein Schüttgut aus zellulosehaltigen Spänen mit annähernd kubischer Körnung, welche zuvor mit einer festen Bindemittelummantelung ausgestattet wurde, eingesetzt wird. Die Faserlage innerhalb des kubischen organischen Korns der Füllstoffzumischung ist dabei überwiegend längs/bzw. quer ausgerichtet und die zellulosehaltigen Späne sind sowohl mit als auch ohne Salzfrachtausrüstung mit der Bindemittelummantelung ausgestattet. Die kubische zellulosehaltige Körnung weist ein Kornspektrum von 0,5 bis 32 mm in einer isotropen, homogenen anteiligen Verteilung innerhalb der Baustoffmischung auf.

## Beschreibung

Die Erfindung betrifft eine Baustoffmischung zur Herstellung von den Schall absorbierenden und mit guten thermischen Eigenschaften ausgestatteten Bauelementen, wobei die Baustoffmischung aus Füllstoffen und Bindemitteln besteht. Die Baustoffmischung soll für das Herstellen von Wänden, Decken, Bodenplatten mit speziellen Trittschalldämmeigenschaften und Lärmabsorberplatten für den Strassen- und Tunnelbau mit hohen Ansprüchen an die Schallabsorption und die Wärmedämmung geeignet sein.

Aufgabe der Erfindung ist die Schaffung einer Baustoffmischung als Mörtelmischung zur Herstellung von Bauelementen mit einer hohen Effizienz an Schallabsorption bei gleichzeitigem Erreichen von guten bis sehr guten Wärmedämmeigenschaften. Dabei soll es auch möglich sein, ohne Verzicht auf die gewünschten Eigenschaften auch dünnere Materialschichten mit der Baustoffmischung bei der Herstellung der gewünschten Produkte zu fertigen. Sowohl die Baustoffmischung als auch die mit ihr hergestellten Bauelemente sollen sich weiterhin durch ein geringeres Gewicht auszeichnen. Dennoch sollen die mit der erfinderischen Baustoffmischung hergestellten Bauelemente hohe Druckbelastungen aufnehmen können und eine hohe Biegesteifigkeit aufweisen. Die Baustoffmischung soll zudem kostengünstig in der Herstellung sein.

Erfindungsgemäß wird die Aufgabe durch die Merkmale des Anspruchs 1 gelöst, wobei die vorteilhaften Ausgestaltungen in den Unteransprüchen beschrieben sind.
Danach besteht die Baustoffmischung zur Herstellung von den Schall absorbierenden und mit guten thermischen Eigenschaften ausgestatteten Bauelementen zunächst aus Füllstoffen und Bindemitteln, wie es für die herzustellenden Produkte bereits vorgegeben ist.

Als Füllstoff wird jedoch wenigstens ein Schüttgut aus zellulosehaltigen Spänen mit annähernd kubischer Körnung, welche zuvor mit einer festen Bindemittelummantelung ausgestattet wurde, eingesetzt. Der Füllstoff kann dabei zusätzlich oder als Ersatz eines sonst eingesetzten Füllstoffes eingesetzt werden. Die übrige Mischung an Bindemittel und Zuschlagstoffen entspricht ansonsten dem für das jeweilige Produkt üblichen Einsatzspektrum.
Die zellulosehaltigen Späne können vor der Mineralisierung mit einer Salzfracht ausgerüstet werden, bevor diese mit der Bindemittelummantelung ausgestattet werden. Da diese Körnung jedoch in einer mit Bindemitteln ausgestatteten Mischung eingesetzt werden, kann bei bestimmten Einsatzfällen auch auf die Salzfracht verzichtet werden. Gerade dann, wenn das gewünschte mit der Baustoffmischung zu fertigende Produkt nicht extremen Witterungsbedingen und einem extremen Abrieb ausgesetzt ist oder die eingesetzten pflanzlichen Bestandteile sehr witterungsresistent sind. Die kubische zellulosehaltige Körnung hat ein Kornspektrum von 0,5 bis 3,0 mm und weist eine isotrope, homogene anteilige Verteilung innerhalb der Baustoffmischung auf. Die Werte des Kornspektrum der gehackten und gebrochenen bzw. geschnittenen zellulosehaltigen Späne sind mindestens 0,5 bis maximal 2,0 mm kleiner das die Werte des Kornspektrums des Endgranulates. Durch die annähernd kubische Form des zellulosehaltigen und mit einer festen Bindemittelummantelung ausgestatteten Korns und das Einbringen dieser in einem kurz gefassten Kornspektrum in das erfindungsgemäße Schüttgut führen dazu, dass bei der Verdichtung innerhalb einer Mischung kein Fehlstellen gebildet werden, sondern das kubische ummantelte Korn gleichmäßig in der Mischung verteilt eingebracht werden kann.
Bei einer geometrischen Form, welche eine größere Längsabmessung als die übrigen beiden Abmessungen aufweist, kommt es innerhalb der Mischung zum Einordnen von aufgerichteten zellulosehaltigen ummantelten Spänen, welche für die Schallabsorption zu unerwünschten Fehlstellen innerhalb des Fertigproduktes führen. Es kann keine homogene Verteilung dieser zellulosehaltigen und mit einer festen Bindemittelummantelung ausgestatteten überwiegend eine längliche Form ausweisenden Körnung realisiert und garantiert werden. Dies ist für den Schallschutz und für die Wärmedämmung außerordentlich wichtig.
Dass die Faserlage innerhalb des kubischen organischen Korns der erfindungsgemäßen Füllstoffzumischung überwiegend längs/bzw. quer ausgerichtet ist, führt dazu, dass auch die erforderlichen Belastbarkeitswerte für Druck und Biegung für die herzustellenden Produkte dennoch eingehalten werden können.

Der eingesetzte erfindungsgemäße Füllstoff aus zellulosehaltigen und mit einer festen Bindemittelummantelung ausgestatteten Körnung ist vorteilhafter Weise dadurch gekennzeichnet, als aufzubereitenden Späne Holzspäne, Altholzspäne, Späne von Rinden und festen zellulosehaltigen Pflanzenmaterial, wie Schilfrohrspäne, vorzugsweise vom Riesen-Chinaschilf (Miscantus) eingesetzt werden und vor dem Mineralisierungsprozess in einer speziell durch Hacken und Brechen oder Schneiden aufbereiteten nahezu kubischen Struktur mit fraktalen, also mit nicht glatten Peripheriebereichen, jedoch annähernd gleichen geometrischen Abmessungen gefertigt werden, bevor sie mit einer zusätzlichen mineralischen festen Ummantelung aus Beton ausgestattet werden.
Als weitere Füllstoffe werden Sand, Ziegelmehl, mineralische Granulate, wie Tongranulate, Ton, Lehm und/oder Farbstoffe pflanzlicher oder mineralischer Herkunft entsprechend der gewünschten Qualitäten des mit der Mischung hergestellten Endproduktes eingesetzt.
Als Bindemittel werden mineralische, organische und/oder anorganische Bettungsmassen entsprechend der gewünschten Qualitäten des mit der Mischung hergestellten Endproduktes eingesetzt werden.
Als weitere Zuschlagstoffe werden Hilfszuschläge für das Aufbringen, Umschließen, Färben, Neutralisieren, Eindringen, Mischen, Beschleunigen des Abbindeprozesses und des Trocknungsprozesses der Baustoffmischung eingesetzt.
Unter Verwendung konventioneller Bettungsmassen und besonderer Zuschlagstoffe ist ein aushärten dieses Granulates in verschiedene Formen und Produktstärken, mit besonderes guten den Schall absorbierenden und besonderes guten thermischen Eigenschaften und damit für die vielfältigsten Anwendungsmöglichkeiten gegeben. Hierzu zählen die Herstellung von Leichtbeton, Füll- und Ausgleichsmassen, Estrich, Herzestrich für den Fußbodenbau aber auch die Herstellung von Bauelementen für den Wand- und Deckenbereich, spezielle Schallabsorberplatten, -wände und Deckenelemente, dreidimensionale Formteile zum Einsatz in Bauelementen, auch als Profilformteile. Da der überwiegende Grundbestandteil der mit der erfindungsgemäßen Baustoffmischung hergestellten Bauteile aus zellulosischem Material besteht, lassen die Bauteile weitestgehend dübelfreie Lastaufnahmemittel zu. Dennoch sind die gefertigten Bauteile aus der erfindungsgemäßen Baustoffmischung schimmelresistent, zersetzungssicher und sicher vor das Holz schädigenden Insektenbefall.
Mit der erreichten isotropen, homogenen Verteilung des speziell aufbereiteten Zuschlagstoffes innerhalb der erfindungsgemäßen Baustoffmischung in einer Konglomeratstruktur wird eine dauerhafte Verbindung durch Haftschluss zwischen dem erfindungsgemäßen Zuschlagstoff in konventionellen Bettungsmassen aus Zuschlagstoff, Bindemitteln und Zusätzen erreicht, was jedoch dazu führt, dass ein Bauelement geschaffen werden kann,
welches sehr gute, den Schall absorbierende Eigenschaften mit sehr guten Wärmedämmeigenschaften in sich vereint. Den Schall nicht absorbierende Fehlstellen können sicher vermieden werden.
Ein sehr wesentlicher angestrebter Vorteil besteht darin, dass der größte Stoffliche Anteil der Produkte aus nachwachsenden Rohstoffen, wie beispielsweise europäisches Nadelholz, ohne Prozesstrocknung zur Ausstattung mit einer Bindemittelummantelung und zur Weiterverarbeitung in der Baustoffmischung zur Anwendung kommt. Das Bindemittel kann das zu Abbindung benötige Wasser überwiegend aus dem kubischen Korn nehmen. Dadurch erfährt dieser Zuschlagstoff einen hohen Nachhaltigkeitscharakter.

Die Erfindung soll nachstehend an einem Ausführungsbeispiel näher erläutert werden.

### Ausführungsbeispiel 1:

Bei der Erfindung handelt es sich um eine Baustoffmischung aus konventionellen Bindemitteln, Zuschlags- und Hilfsstoffen, wie sie für die Herstellung eines Estrichbetons gemäß den gewünschten Festigkeitswerten gefordert sind. Dieser konventionellen Mischung wird als Füllstoff ein Granulat aus mineralisierten Holzspänen in einem Kornspektrum von 2,0 - 5,0 mm zugemischt. Das Zumischungsverhältnis zu den anderen übrigen eingesetzten trockenen Einsatzstoffen beträgt 1/3 an der Gesamtmasse der Bausstofftrockenmischung. Insbesondere hat das Ausgangsprodukt in der Einzelkornbewertung eine besondere kubische, fraktale Form, in einer speziell definierten geometrischen Größe von 0,5 bis 3,0 mm.
Dieser Estrichbeton weist somit einen großen Anteil an Materialien aus Zellulose auf, ohne dass die Gefahr des Ausblühens durch nachträgliches Wasseraufnahme der Holzspäne besteht. Er zeichnet sich durch eine sehr kurzfristige Begehbarkeit (Formstabilität) durch die besondere, Lager und Setzungsstruktur des Holzgranulates aus. Der Estrichbeton kann dennoch maschinell verarbeitet werden, da die Mischung selbst, aber auch mit Wasser versetzt durch den Einsatz der kubischen Körnung als mit Bindemittel ummanteltes Granulat für den Einsatz von Pumpentechnik einsetzbar und geeignet ist.
Für den Einsatz als Füllstoff für Estrichbeton bestehen die Besonderheiten der Baustoffmischung darin, dass durch den Einsatz des größten stofflichen Anteile der Estrichmischung aus nachwachsenden Rohstoffen und zum größten Teil aus einheimischen europäischen Nadelholz, welches ohne Trocknung aufbereitet und ummantelt wird und dadurch einen hohen Nachhaltigkeitscharakter aufweist.
Der Estrich selbst zeichnet sich durch eine sehr gute Trittschallabsorption und sehr gute Wärmedämmeigenschaften aus und ist somit ideal für den Wohnungs- und Bürobau geeignet.

### Ausführungsbeispiel 2:

Für den Einsatz als Lärmschutzwand im Autobahn und Tunnelbau ist es erforderlich, eine Baustoffmischung für die Herstellung von besonders hohen den Schall absorbierenden Eigenschaften ausgestatteten Bauelementen bereit zu stellen. Dazu wird einer konventionellen Bettungsmasse für den Einsatz von Schallschutzwänden oder im Tunnelbau mindestens 3/7 Masseanteil der Mischung aus Trockenmasse bezogen auf den Gesamttrockenmasseanteil ein Schüttgut aus zellulosehaltigen Spänen mit annähernd kubischer Körnung, welche zuvor mit einer festen Bindemittelummantelung ausgestattet wurde, zugegeben. Als kubische zellulosehaltige Körnung mit einem Kornspektrum von 0,5 bis 30 mm in einer isotropen, homogenen anteiligen Verteilung innerhalb der Baustoffmischung besteht aus gehackten, ungetrockneten Holzspänen aus anfallenden Abfällen in der Holzaufbereitung. Der ungetrocknete Span weist noch so viel Wasseranteil auf, dass er bei Zugabe von Bindemittel zur Ummantelung dieses an das Bindemittel abgibt und reagieren lässt. Sollte dies nicht reichen, kann zusätzlich Wasser zur Granulierung der kubischen zellulosehaltigen Körnung zugemischt werden. Die Faserlage innerhalb des kubischen organischen Korns der Füllstoffzumischung ist dabei überwiegend längs/bzw. quer ausgerichtet, was durch die Brech- und Hackprozessaufbereitung des Abfallholzes realisiert wird. Die zellulosehaltigen Späne wurden vor der Bindemittelummantelung mit einer Salzfracht ausgerüstet, um dem eingesetzten zellulosischen Span mit einen zusätzlichen Schutz bei eindringender Nässe auszustatten. Die Trockenmischung der konventionellen Bettungsmasse mit der Anreicherung durch eine kubische zellulosehaltige Körnung, welche zuvor mit einer Salzfracht ausgestattet und anschließend mit einer festen Bindemittelummantelung ausgestattet wurde, wird vor dem Einsatz einer guten Durchmischung unterzogen und vor Ort beim Fertigungsprozess der Wände mit Wasser versetzt, um abbinden zu können. Derartig hergestellte Bauteile weisen einen schnellen Abbindeprozess auf, da das ummantelte kubische Holzkorn durch seine Außenstruktur die in der Bettungsmasse vorhandenen Bindemittel gut anlagert und somit eine schnelle Aufnahme des Wassers zum Abbinden erfolgt und der Abbindeprozess beschleunigt wird. Die fertigen Bauteile weisen ein sehr gutes Eigendämpfungsverhalten beim Beanspruchen durch Druckwellen auf, wie sie bei hohen Schallbelastungen oft vorkommen. Aber auch die Schallabsorption ist nach den bisher durchgeführten Labormessungen enorm hoch. Auch die hohe Biegezugbeanspruchung bei geringen Bauteildimensionen und / oder Schichthöhen konnte labortechnisch bereits nachgewiesen werden, was gerade im Tunnelbau eine große Rolle spiel. Gepaart mit den Schallabsorptionseigenschaften ist diese Material sehr gut für den Tunnelbau und den bau von speziellen Absorptionswänden an Autobahnbereichen geeignet.

### Ausführungsbeispiel 3:

Für den Einsatz als Leichtlehmbauelement, wie Leichtlehmbausteine oder Leichtlehmbauplatten, werden als zellulosehaltiger Zuschlagstoff Schilfrohrspäne vom Riesen-Chinaschilf (Miscanthus) eingesetzt. Vor der Ummantelung mit einem sich aushärtenden mineralischen Bindemittel aus Beton, wird das Schilfrohr in annähernd kubische Stücke mittels Brechen oder Schneiden, zerkleinert und in ein Kornspektrum von 16 mm bis 32 mm fraktioniert, so dass die Abmessungen des Einzelspans in allen drei geometriechen Ausrichtungen annähern gleich sind. Das mit einer mineralischen Ummantelung ausgestattete Korn wird anschließend einem Lehm-Sand-Gemisch im Verhältnis 0,5:1 bis zu einem Verhältnis von 1:1 zugemischt und vor dem Einbringen in die gewünschte Stein- oder Plattenform mit Wasser versetzt, um den Abbindeprozess zu initiieren. Auf Grund der im Schilfrohr vorhandenen Hohlräume, welche beim Zerkleinern zum größten Teil erhalten bleiben und auf Grund des geringen Gewichtes von Schilfrohrmaterial, werden unter Einschluss von Hohlräumen bei der mineralischen Ummantelung, Gewichtsreduzierungen erreicht. Die Leichtbau-Lehmplatte als auch der Leichtbau-Lehmstein können dadurch mit einem Raumgewicht von 500 - 650 kg/m³ bereitgestellt werden. Ein weiterer Vorteil des Einsatzes von Schilfrohrspänen liegt darin, dass auf die Mineralisierung der Späne verzichtet werden kann, da die Verrottung dieses Materials sehr zeitintensiv ist und durch die mineralische Ummantelung verhindert wird.

## Patentansprüche

1. Baustoffmischung zur Herstellung von den Schall absorbierenden und mit guten thermischen Eigenschaften ausgestatteten Bauelementen, bestehend aus Füllstoffen und Bindemitteln, **dadurch gekennzeichnet, dass** als Füllstoff wenigstens ein Schüttgut aus zellulosehaltigen Spänen mit annähernd kubischer Körnung, welche zuvor mit einer festen Bindemittelummantelung ausgestattet wurde, eingesetzt wird,
dass die Faserlage innerhalb des kubischen organischen Korns der Füllstoffzumischung überwiegend längs/bzw. quer ausgerichtet ist,
dass die zellulosehaltigen Späne sowohl mit als auch ohne Salzfrachtausrüstung mit der Bindemittelummantelung ausgestattet sind und
dass die kubische zellulosehaltige Körnung ein Kornspektrum von 0,5 bis 32 mm in einer isotropen, homogenen anteiligen Verteilung innerhalb der Baustoffmischung aufweist.

2. Baustoffmischung nach dem Anspruch 1, **dadurch gekennzeichnet, dass** als zellulosehaltige Späne Holzspäne, Altholzspäne, Späne von Rinden und festen zellulosehaltigen Pflanzenmaterial, vor dem Mineralisierungsprozess in einer speziell durch Hacken und Brechen aufbereiteten kubischen Struktur mit zum Teil fraktaler (nicht glatten Peripheriebereichen) jedoch gleichseitigen Geometrie mit einer zusätzlichen mineralischen festen Ummantelung eingesetzt werden.

3. Baustoffmischung nach einem der Ansprüche 1 und 2, **dadurch gekennzeichnet, dass** als weitere Füllstoffe Sand, Ziegelmehl, mineralische Granulate, wie Tongranulate, Ton, Lehm und/oder Farbstoffe pflanzlicher oder mineralischer Herkunft entsprechend der gewünschten Qualitäten des mit der Mischung hergestellten Endproduktes eingesetzt werden.

4. Baustoffmischung nach dem Anspruch 1 bis 3, **dadurch gekennzeichnet, dass** als Bindemittel mineralische, organische und/oder anorganische Bettungsmassen entsprechend der gewünschten Qualitäten des mit der Mischung hergestellten Endproduktes eingesetzt werden.

5. Baustoffmischung nach einem der Ansprüche 1 bis 4, **dadurch gekennzeichnet, dass** als weitere Zuschlagstoffe Hilfszuschläge für das Aufbringen, Umschließen, Färben, Neutralisieren, Eindringen, Mischen, Beschleunigen des Abbinde-Prozesses und des Trocknungsprozesses der Baustoffmischung eingesetzt werden.

6. Baustoffmischung nach einem der Ansprüche 1 bis 4, **dadurch gekennzeichnet, dass** als zellulosehaltige Späne Holzspäne aus festen zellulosehaltigen Pflanzenmaterial Schilfrohrspäne eingesetzt werden.
